# FASCICULE DE BREVET EUROPEEN

(11) **EP 3 891 652 B1**
(45) Date de publication et mention de la délivrance du brevet: **23.07.2025**
(21) Numéro de dépôt: 19801237.9
(22) Date de dépôt: 30.10.2019
(51) Int. Cl.: G06V 10/22, G06V 20/59

(54) **DISPOSITIF ET PROCÉDÉ DE DÉTECTION DE LA DISTRACTION D'UN CONDUCTEUR D'UN VÉHICULE**
VORRICHTUNG UND VERFAHREN ZUR ERKENNUNG DER ABLENKUNG EINES FAHRERS EINES FAHRZEUGS
DEVICE AND METHOD FOR DETECTING THE DISTRACTION OF A DRIVER OF A VEHICLE

(30) Priorité: 03.12.2018 FR 1872241
(43) Date de publication de la demande: 13.10.2021
(73) Titulaire: Valeo Comfort and Driving Assistance, 94000 Créteil (FR)
(72) Inventeur: DELAHAYE, Vincent, 94046 Créteil CEDEX (FR)
(74) Mandataire: Delplanque, Arnaud
(86) Numéro de dépôt international: PCT/EP2019/079612
(87) Numéro de publication internationale: WO 2020/114682

(56) Documents cités:
- US-B1- 10 013 620
- "Driver Distraction and Inattention", 1 January 2013, CRC, article MICHAEL REGAN: "Driver Distraction and Inattention", pages: 328 - 348, XP055622202

## Description

La présente invention concerne de manière générale la détection de la distraction d'un individu, en particulier dans un véhicule.

Elle concerne plus particulièrement un dispositif et un procédé de détection de la distraction d'un conducteur d'un véhicule.

Il est connu de surveiller le conducteur d'un véhicule automobile à l'aide d'un dispositif de surveillance adapté à déterminer un état de vigilance du conducteur et notamment à prévenir l'endormissement au volant. En fonction de l'état de vigilance déterminé, le dispositif de surveillance alerte le conducteur pour éviter qu'il ne se mette dans une situation dangereuse.

Un tel dispositif de surveillance déduit l'état de vigilance du conducteur en fonction de paramètres comportementaux associés au conducteur et/ou de paramètres de fonctionnement du véhicule. En pratique, les paramètres comportementaux, par exemple le rythme de fermeture des paupières ou la direction du regard, sont obtenus en analysant des images de la tête du conducteur, et les paramètres de fonctionnement du véhicule, par exemple les paramètres relatifs à un angle de rotation du volant, à une vitesse du véhicule ou à l'action du conducteur sur certaines touches, sont obtenus à partir de capteurs physiques du véhicule.

On connaît également des systèmes de détection adaptés pour évaluer la distraction du conducteur, par exemple à partir de la direction de regard du conducteur. Ainsi, le conducteur est considéré comme n'étant pas distrait lorsqu'il regarde la route ou son rétroviseur intérieur. Le conducteur est considéré comme distrait lorsqu'il regarde dans une autre direction que celle de la route et des organes nécessaires à la conduite par exemple du côté du passager avant. Le document US10013620B1 décrit un système embarqué destiné à surveiller les conducteurs et passagers à l'intérieur des véhicules via des capteurs et caméras. Il permet de compresser automatiquement les données d'image en supprimant celles jugées redondantes. Les données collectées (positions de la tête, des mains, ceinture, téléphone...) servent à évaluer le risque d'assurance en fonction du comportement du conducteur. Les mains du conducteur sont suivies par des caméras embarquées qui analysent leur position, leurs mouvements et les objets tenus, via des modèles squelettiques. Ces données permettent d'évaluer la distraction ou l'attention du conducteur.

Ces systèmes de détection de la distraction du conducteur ont pour avantage d'estimer si un conducteur est distrait lorsqu'un véhicule est en fonctionnement et ainsi améliorent considérablement les conditions de sécurité des conducteurs.

Afin d'améliorer les systèmes de détection de la distraction d'un conducteur, la présente invention propose un dispositif de détection de la distraction d'un conducteur d'un véhicule.

Plus particulièrement, on propose selon l'invention un dispositif de détection de la distraction d'un conducteur d'un véhicule comprenant :
- un ensemble d'acquisition d'images adapté à acquérir au moins une image d'une zone de détection située dans ledit véhicule, ladite zone de détection comprenant une partie au moins du conducteur du véhicule,
- un module de traitement de l'image acquise conçu pour déterminer :
   une direction associée à la tête du conducteur, et
   une position d'au moins une main du conducteur, et
- un module d'analyse conçu pour détecter la distraction dudit conducteur en déterminant, sur la base de la direction associée à la tête et de la position d'au moins une main, la présence éventuelle d'au moins une main dans la direction associée à la tête du conducteur.

Ainsi, le dispositif de l'invention permet de déterminer si l'attention d'un conducteur est portée vers sa main, et donc éventuellement vers un objet qu'il tient dans sa main et qui compromettrait éventuellement sa sécurité en le distrayant de la route.

D'autres caractéristiques non limitatives et avantageuses du dispositif de détection conforme à l'invention, prises individuellement ou selon toutes les combinaisons techniquement possibles, sont les suivantes :
- il est également prévu un module de mesure d'un temps conçu pour évaluer un temps de détection pendant lequel au moins une main est localisée dans ladite direction associée à la tête déterminée par le module de traitement ;
- il est également prévu un module d'émission d'un signal d'alarme en fonction de la détection d'une situation de distraction ;
- la situation de distraction correspond à une configuration dans laquelle au moins une main du conducteur est localisée à l'extérieur d'au moins une zone autorisée ;
- la situation de distraction comprend une configuration dans laquelle le temps de détection est supérieur à un seuil prédéterminé ;
- le module d'émission est conçu pour émettre le signal d'alarme dans le cas d'une condition de conduite du véhicule ;
- la condition de conduite correspond à la détection d'une vitesse du véhicule supérieure à une valeur de vitesse prédéterminée ou à l'absence d'une utilisation d'une unité de conduite autonome ;
- le module de traitement est également conçu pour déterminer une posture du conducteur ;
- le module de traitement de l'image acquise est conçu pour déterminer la direction associée à la tête du conducteur et la position d'au moins une main du conducteur sur la base d'une représentation de la posture du conducteur ;
- le module de traitement est conçu pour déterminer une direction d'orientation de la tête ou une direction de regard du conducteur.

L'invention propose également un procédé de détection de la distraction d'un conducteur d'un véhicule comprenant des étapes de :
- acquisition d'au moins une image d'une zone de détection située dans ledit véhicule, ladite zone de détection comprenant une partie au moins du conducteur du véhicule,
- détermination d'une direction associée à la tête du conducteur,
- détermination d'une position d'au moins une main du conducteur, et
- détection de la distraction dudit conducteur par comparaison de la direction associée à la tête et de la position d'au moins une main déterminées pour déterminer la présence éventuelle d'au moins une main dans la direction associée à la tête du conducteur.

Le procédé peut également comprendre des étapes de :
- mesure d'un temps de détection pendant lequel au moins une main est localisée dans ladite direction associée à la tête déterminée par un module de traitement, et
- émission d'un signal d'alarme en fonction de la détection d'une situation de distraction.

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] représente schématiquement une vue avant d'un véhicule automobile équipé d'un dispositif de détection de la distraction d'un conducteur conforme à l'invention,
[Fig. 2] représente un exemple de dispositif de détection de la distraction d'un conducteur conforme à l'invention,
[Fig. 3] représente, sous forme de logigramme, un premier exemple de procédé de détection de la distraction d'un conducteur conforme à l'invention, et
[Fig. 4] représente, sous forme de logigramme, un deuxième exemple de procédé de détection de la distraction d'un conducteur conforme à l'invention.

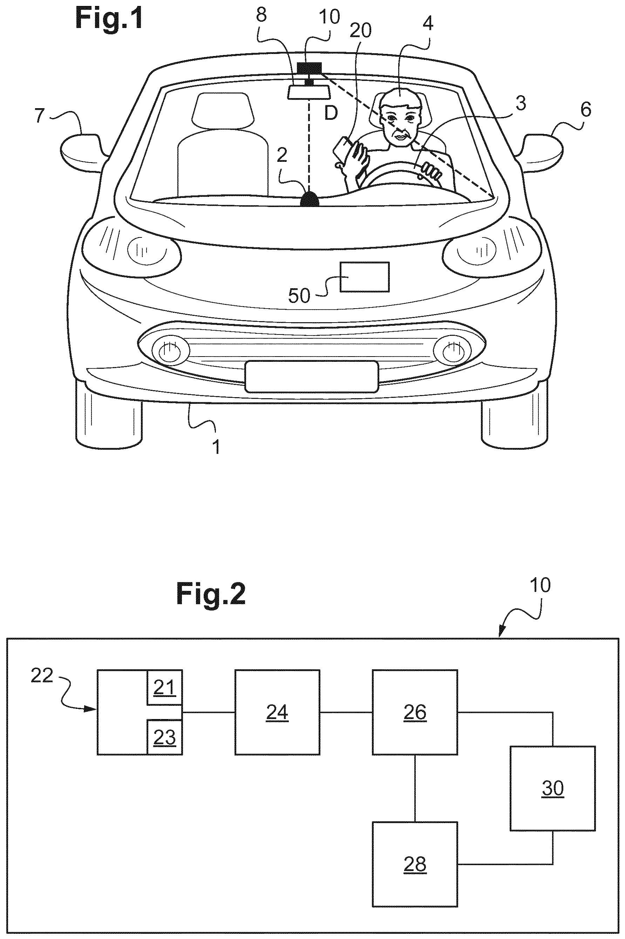

Sur la figure 1, on a représenté l'avant d'un véhicule automobile 1 (également appelé « véhicule 1 » dans la suite) embarquant un dispositif 10 de détection de la distraction d'un conducteur 4 du véhicule 1.

Plus précisément, un tel dispositif 10 de détection de la distraction est adapté à déterminer l'état de distraction du conducteur 4 en fonction de la détermination d'une posture du conducteur 4 dans le véhicule 1. La posture ainsi déterminée permet de déduire en particulier la position de la tête et d'au moins une main du conducteur afin de savoir si le conducteur 4 est concentré sur sa conduite ou au contraire est distrait.

Dans cette description, on considère que le conducteur 4 est distrait s'il ne concentre pas son attention sur la route, ni sur un rétroviseur (par exemple un rétroviseur droit 6 ou un rétroviseur gauche 7 ou un rétroviseur central 8) ou sur un organe de conduite tel qu'un volant 3 ou un levier de vitesse 2. Au contraire, le conducteur 4 est par exemple considéré comme étant distrait s'il concentre son attention sur le passager avant ou sur un objet non utile à la conduite. Par exemple, dans le cas représenté sur la figure 1, le conducteur tient un objet 20 dans une main, ici un téléphone mobile.

Comme visible sur la figure 2, le dispositif 10 de détection de la distraction comprend un ensemble d'acquisition d'images 22, un module de traitement 24 d'au moins une image acquise, un module d'analyse 26, un module de mesure d'un temps 28 et un module d'émission 30 d'un signal d'alarme.

L'ensemble d'acquisition d'images 22 est embarqué dans le véhicule 1, plus précisément dans l'habitacle du véhicule 1. L'ensemble d'acquisition d'images 22 est adapté à acquérir au moins une image à l'intérieur du véhicule 1.

En particulier, l'ensemble d'acquisition d'images 22 est adapté à acquérir une image d'une zone de détection D située à l'intérieur du véhicule 1. Comme représenté sur la figure 1, la zone de détection D s'étend entre le levier de vitesse 2 et la portière avant du véhicule 1 (non visible sur la figure 1). Cette zone de détection D comprend donc le volant 3 et une partie au moins du conducteur 4. En pratique, la tête et au moins une main du conducteur sont localisées dans la zone de détection D.

L'ensemble d'acquisition d'images 22 comprend par exemple au moins un capteur tridimensionnel 21 permettant de capturer une image tridimensionnelle de la zone de détection D et en particulier du conducteur 4 du véhicule 1. En variante, l'ensemble d'acquisition d'images 22 peut comprendre également un capteur bidimensionnel 23. Le capteur bidimensionnel 23 est par exemple adapté à capturer une image du visage du conducteur 4, et en particulier de ses yeux.

En pratique, pour capturer des images de la zone de détection D, le capteur tridimensionnel 21 est par exemple positionné dans un plafonnier avant du véhicule 1, de sorte qu'il prend en vue de dessus la zone de détection D. Le capteur bidimensionnel 23 est par exemple disposé dans une partie inférieure du pare-brise du véhicule 1, sensiblement en face du conducteur 4.

En variante, les capteurs tridimensionnel 21 et bidimensionnel 23 peuvent être placés sur une planche de bord du véhicule 1, dans une zone centrale de cette dernière.

Comme représenté sur la figure 2, le dispositif 10 de détection de la distraction comprend également le module de traitement 24 de l'image acquise par l'ensemble d'acquisition d'images 22. Le module de traitement 24 est conçu pour recevoir les images acquises et déterminer une posture du conducteur 4 dans le véhicule 1.

En particulier, le module de traitement 24 est conçu pour déterminer, à partir du traitement des images acquises, une représentation de la posture du conducteur. Par représentation de la posture du conducteur 4, on entend la localisation et la position de différents membres du corps du conducteur 4, en particulier de la tête et des mains du conducteur 4.

En pratique, à partir de cette représentation de la posture, le module de traitement 24 est conçu pour déterminer une direction associée à la tête du conducteur 4. Par direction associée à la tête, on entend par exemple ici une direction d'orientation globale de la tête ou une direction d'un élément de la tête du conducteur. Dans l'exemple décrit ici, la direction associée à la tête comprend la direction d'orientation de la tête ou la direction de regard du conducteur 4. En particulier, le module de traitement 24 est ici conçu pour déterminer une direction d'orientation de la tête du conducteur 4. Le module de traitement 24 est également conçu pour déterminer la position d'au moins une main du conducteur 4 en fonction de la représentation de la posture. Le module de traitement 24 est également conçu pour déterminer une direction de regard du conducteur 4 lorsque des images sont acquises par le capteur bidimensionnel 23.

Le dispositif 10 de détection de la distraction comprend aussi le module d'analyse 26. Le module d'analyse 26 est conçu pour déterminer, à partir de la direction d'orientation de la tête et de la position des mains déterminées par le module de traitement 24, la présence éventuelle d'au moins une main dans la direction d'orientation de la tête du conducteur 4. En d'autres termes, le module d'analyse 26 détermine si la tête du conducteur 4 est dirigée vers l'une de ses mains (ou vers les deux). En variante, le module d'analyse 26 peut déterminer si le regard du conducteur 4 est dirigé vers l'une de ses mains.

Comme visible sur la figure 2, le dispositif 10 de détection de la distraction comprend un module de mesure d'un temps 28. Ce module de mesure du temps 28 est conçu pour évaluer un temps de détection pendant lequel au moins une main est localisée dans la direction d'orientation de la tête du conducteur 4. En d'autres termes, le module de mesure d'un temps 28 évalue le temps (appelé ici temps de détection) pendant lequel la tête du conducteur 4 reste dirigée vers au moins l'une de ses mains. En variante, le module de mesure d'un temps 28 peut évaluer le temps pendant lequel le regard du conducteur reste dirigé vers au moins l'une de ses mains.

Le dispositif 10 de détection de la distraction comprend enfin un module d'émission 30 d'un signal d'alarme. Le module d'émission 30 d'un signal d'alarme est conçu pour émettre un signal d'alarme lorsqu'une situation de distraction est détectée. Par situation de distraction, on entend par exemple la localisation d'au moins une main du conducteur 4 à l'extérieur d'une zone autorisée (décrite ci-après) ou la mesure du temps de détection supérieur à un seuil prédéterminé (également décrit ci-après).

L'invention concerne également une méthode de détection de la distraction d'un conducteur 4 du véhicule 1 par l'utilisation du dispositif 10 de détection précédemment décrit.

Cette méthode peut être avantageusement utilisée afin, par exemple, de déterminer si le conducteur 4 est distrait par un objet qu'il tient dans l'une de ses mains, par exemple un téléphone mobile.

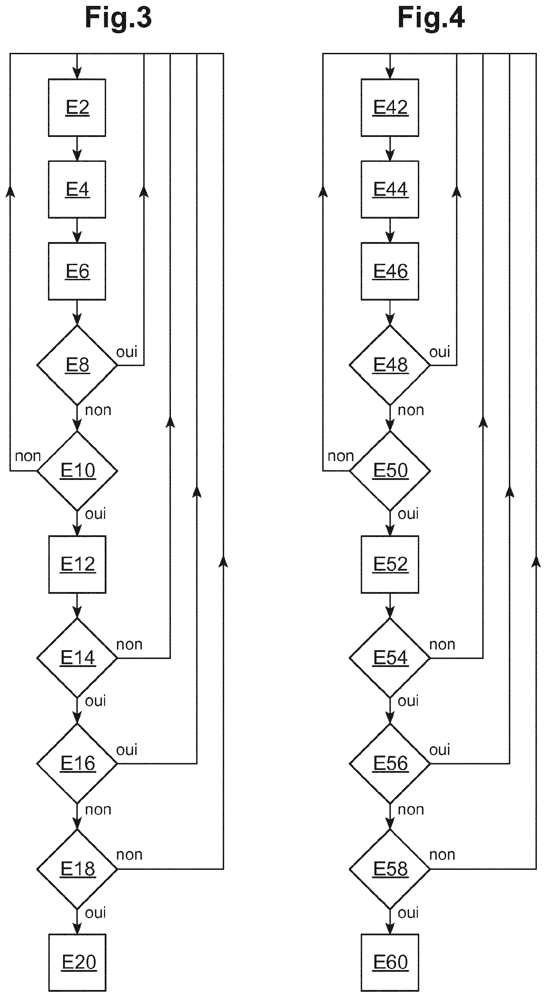

La figure 3 représente un premier exemple de mise en œuvre d'un procédé de détection de la distraction du conducteur 4 du véhicule 1, illustré sous forme d'étapes.

Comme représenté sur la figure 3, le procédé débute à l'étape E2. Lors de cette étape, au moins une image de la zone de détection D est acquise par le capteur tridimensionnel 21 de l'ensemble d'acquisition d'images 22. L'image acquise comprend en particulier la tête et au moins une main du conducteur 4.

A l'étape E4, l'image acquise à l'étape E2 est traitée par le module de traitement 24 afin de déterminer la posture du conducteur. En pratique, le module de traitement 24 détermine, à partir de l'image acquise (ici tridimensionnelle comme indiqué précédemment), une représentation de la posture du conducteur. En d'autres termes, le module de traitement 24 permet de déterminer la position de différents éléments du corps du conducteur 4 et en particulier la position de la tête et d'au moins une main du conducteur 4.

Le module de traitement 24 détermine alors, à partir de la représentation de la posture du conducteur 4 et donc par analyse des images acquises, la direction d'orientation de sa tête et la position d'au moins une de ses mains (étape E6).

Le procédé se poursuit ensuite à l'étape E8. Dans cette étape, le module d'analyse 26 utilise la position des mains déterminée à l'étape E6 pour savoir si les mains sont localisées dans au moins une zone autorisée. Une zone autorisée pour la position des mains est définie à partir des zones dans lesquelles les mains se posent pendant la conduite d'un véhicule. Par exemple ici, une zone autorisée peut comprendre le levier de vitesse 2, le volant 3, des éléments de réglage de la ventilation de l'habitacle ou tout autre organe de conduite ou de réglage utile au conducteur 4 pendant sa conduite. Sur l'exemple de la figure 1, la main gauche du conducteur est positionnée sur le volant 3 et se trouve donc dans la zone autorisée telle que définie précédemment. En revanche, la main droite tient un téléphone mobile 20 et n'est pas dans la zone autorisée.

Dans le procédé conforme à l'invention, si les deux mains sont dans la zone autorisée, le procédé reprend à l'étape E2. Si l'une deux mains (ou les deux) se trouvent à l'extérieur de la zone autorisée, le procédé se poursuit à l'étape E10.

A l'étape E10, le module d'analyse 26 détermine la présence éventuelle de la main localisée en dehors de la zone autorisée dans la direction d'orientation de la tête du conducteur 4. En d'autres termes, le module d'analyse 26 détermine si la tête du conducteur 4 est orientée vers l'une de ses mains.

Si la tête du conducteur 4 n'est pas orientée vers la main localisée en dehors de la zone autorisée, le procédé reprend à l'étape E2.

Dans le cas contraire, comme visible sur la figure 3, le procédé se poursuit à l'étape E12. Lors de cette étape, le module de mesure d'un temps 28 mesure le temps de détection pendant lequel la tête du conducteur 4 reste dirigée vers sa main, c'est-à-dire le temps pendant lequel la main est localisée dans la direction d'orientation déterminée.

Ce temps de détection est ensuite comparé à un seuil prédéterminé (étape E14). Ce seuil prédéterminé correspond par exemple à un temps maximal pendant lequel le conducteur 4 pourrait détourner son attention de la route sans impliquer de danger pour sa sécurité. En pratique, ce seuil prédéterminé est ici compris entre 1 seconde (s) et 3 s, par exemple de l'ordre de 2 s. Ce seuil prédéterminé pourrait par exemple être fonction de la vitesse du véhicule 1.

Si le temps de détection est inférieur à ce seuil prédéterminé, le conducteur n'est pas considéré comme étant distrait et le procédé reprend à l'étape E2.

En revanche, si le temps de détection est supérieur ou égal au seuil prédéterminé, le procédé se poursuit avec les étapes E16 et E18. Lors de ces étapes, le module d'analyse 26 détermine si le conducteur est en condition de conduite. En particulier, le conducteur est en condition de conduite si une unité de conduite autonome 50 n'est pas utilisée ou si la vitesse du véhicule 1 est supérieure à une valeur de vitesse prédéterminée.

A l'étape E16, le module d'analyse vérifie par exemple si l'unité de conduite autonome 50 est utilisée. Si c'est le cas, le conducteur 4 n'est pas considéré comme étant distrait de sa conduite puisque l'unité de commande autonome l'assiste. Le procédé reprend alors à l'étape E2.

Si l'unité de conduite autonome 50 n'est pas utilisée, le procédé se poursuit à l'étape E18. Lors de l'étape E18, la vitesse du véhicule 1 est comparée à la valeur de vitesse prédéterminée. La valeur de vitesse prédéterminée est par exemple très faible ; l'étape E18 permet alors de déterminer si le véhicule est à l'arrêt. Si la vitesse du véhicule 1 est inférieure à cette valeur prédéterminée, le conducteur 4 n'est pas considéré comme étant en condition de conduite (et donc son état de distraction n'a pas besoin d'être contrôlé). Le procédé reprend à l'étape E2.

Si la vitesse du véhicule 1 est supérieure à la valeur prédéterminée, le conducteur 4 est considéré en condition de conduite et ne doit pas être distrait. Un signal d'alarme est alors émis à l'étape E20 par le module d'émission 30. Le signal d'alarme émis suite à la détection de la distraction du conducteur 4 est par exemple spécifique, notamment en étant plus appuyé qu'un signal d'alarme classique (de type par exemple du signal émis en cas d'un niveau bas de carburant). Le signal d'alarme émis lors de l'étape E20 est par exemple du type du signal émis lorsque le conducteur n'a pas attaché sa ceinture de sécurité, c'est-à-dire un signal intermittent dont l'intensité et la fréquence augmentent tant que la ceinture n'est pas attachée. Ici, l'intensité et la fréquence du signal d'alarme pourraient augmenter jusqu'à ce que le conducteur 4 détourne son attention de l'objet qu'il tient dans sa main.

La figure 4 représente un deuxième exemple de mise en œuvre du procédé de détection de la distraction d'un conducteur 4 du véhicule 1, illustré sous forme d'étapes.

Comme représenté sur la figure 4, le procédé débute à l'étape E42. Lors de cette étape, au moins une image de la zone de détection est acquise par le capteur tridimensionnel 21 de l'ensemble d'acquisition d'images 22. L'image acquise comprend en particulier la tête et au moins une main du conducteur 4. De manière simultanée, une autre image est aussi acquise par le capteur bidimensionnel 23 de l'ensemble d'acquisition d'images 22. Cette autre image comprend par exemple le visage du conducteur 4.

A l'étape E44, l'image acquise à l'étape E42 est traitée par le module de traitement 24 afin de déterminer la posture du conducteur (de manière similaire à l'étape E4 décrite précédemment). Lors de cette étape E44, l'autre image est également traitée afin de déterminer une position de la tête et une direction de regard du conducteur 4 (cette direction de regard étant comme déjà indiqué un exemple de direction associée à la tête du conducteur).

A l'issue de l'étape E44, le module de traitement 24 a donc déterminé la représentation de la posture du conducteur 4 et sa direction de regard.

Le module de traitement 24 détermine ensuite, à partir de la représentation de la posture du conducteur 4, la position d'au moins une de ses mains (étape E46 similaire à l'étape E6 précédemment décrite). En variante, la direction d'orientation de la tête du conducteur 4 peut éventuellement être déterminée à partir de la représentation de la posture du conducteur 4 afin d'être combinée à la direction de regard du conducteur 4.

Le procédé se poursuit ensuite à l'étape E48. Dans cette étape, comme lors de l'étape E8, le module d'analyse 26 utilise la position des mains déterminée à l'étape E46 pour savoir si les mains sont localisées dans la zone autorisée.

Dans le procédé conforme à l'invention, si les deux mains sont dans la zone autorisée, le procédé reprend à l'étape E42. Si l'une deux mains (ou les deux) se trouvent à l'extérieur de la zone autorisée, le procédé se poursuit à l'étape E50.

A l'étape E50, le module d'analyse 26 détermine la présence éventuelle de la main localisée en dehors de la zone autorisée dans la direction d'orientation de la tête du conducteur 4. En particulier, le module d'analyse 26 détermine si le regard du conducteur 4 est orienté vers l'une de ses mains. Cette évaluation rend la détection de la distraction du conducteur 4 plus précise (par rapport à l'utilisation de la direction d'orientation de la tête) car la détermination de la détection de regard permet de savoir où se porte effectivement l'attention du conducteur 4.

Si le regard du conducteur 4 n'est pas orienté vers la main localisée en dehors de la zone autorisée, le procédé reprend à l'étape E42.

Dans le cas contraire, comme visible sur la figure 4, le procédé se poursuit à l'étape E52. Comme lors de l'étape E12, le module de mesure d'un temps 28 mesure le temps de détection pendant lequel la tête du conducteur reste dirigée vers sa main, c'est-à-dire le temps pendant lequel la main est localisée dans la direction de regard déterminée.

Ce temps de détection est ensuite comparé à un seuil prédéterminé (étape E54).

Si le temps de détection est inférieur à ce seuil prédéterminé, le conducteur n'est pas considéré comme étant distrait et le procédé reprend à l'étape E42.

En revanche, si le temps de détection est supérieur ou égal au seuil prédéterminé, le procédé se poursuit avec les étapes E56 et E58 (similaires aux étapes E16 et E18). Lors de ces étapes, le module d'analyse 26 détermine si le conducteur est en condition de conduite. En particulier, le conducteur est en condition de conduite si une unité de conduite autonome 50 n'est pas utilisée ou si la vitesse du véhicule 1 est supérieure à une valeur de vitesse prédéterminée.

A l'étape E56, le module d'analyse vérifie par exemple si l'unité de conduite autonome 50 est utilisée. Si c'est le cas, le conducteur 4 n'est pas considéré comme étant distrait de sa conduite puisque l'unité de commande autonome l'assiste. Le procédé reprend alors à l'étape E42.

Si l'unité de conduite autonome 50 n'est pas utilisée, le procédé se poursuit à l'étape E58. Lors de l'étape E58, la vitesse du véhicule 1 est comparée à la valeur de vitesse prédéterminée. Si la vitesse du véhicule 1 est inférieure à cette valeur prédéterminée, le conducteur 4 n'est pas considéré comme étant en condition de conduite (et donc son état de distraction n'a pas besoin d'être contrôlé). Le procédé reprend à l'étape E42.

Si la vitesse du véhicule 1 est supérieure à la valeur prédéterminée, le conducteur est considéré en condition de conduite et ne doit pas être distrait. Tout comme à l'étape E20 décrite précédemment, un signal d'alarme est alors émis à l'étape E60 par le module d'émission 30.

## Revendications

1. Dispositif (10) de détection de la distraction d'un conducteur (4) d'un véhicule (1) comprenant :
- un ensemble d'acquisition d'images (22) adapté à acquérir au moins une image d'une zone de détection (D) située dans ledit véhicule (1), ladite zone de détection (D) comprenant une partie au moins du conducteur (4) du véhicule (1),
- un module de traitement (24) de l'image acquise conçu pour déterminer :
une direction associée à la tête du conducteur (4), et
une position d'au moins une main du conducteur (4),
- un module d'émission (30) d'un signal d'alarme en fonction de la détection d'une situation de distraction, et
- un module d'analyse (26) conçu pour détecter la distraction dudit conducteur (4) en déterminant, sur la base de la direction associée à la tête et de la position d'au moins une main, la présence éventuelle d'au moins une main dans la direction associée à la tête du conducteur (4) **caractérisé en ce que** la situation de distraction correspond à une configuration dans laquelle au moins une main du conducteur (4) est localisée à l'extérieur d'au moins une zone autorisée définie à partir des zones dans lesquelles les mains se posent pendant la conduite d'un véhicule, le dispositif comprenant également un module de mesure d'un temps (28) conçu pour évaluer un temps de détection pendant lequel au moins une main est localisée dans ladite direction associée à la tête déterminée par le module de traitement (24), la situation de distraction comprenant une configuration dans laquelle le temps de détection est supérieur à un seuil prédéterminé.

2. Dispositif (10) selon la revendication 1, dans lequel le module d'émission (30) est conçu pour émettre le signal d'alarme dans le cas d'une condition de conduite du véhicule (1).

3. Dispositif (10) selon la revendication 2, dans lequel la condition de conduite correspond à la détection d'une vitesse du véhicule supérieure à une valeur de vitesse prédéterminée ou à l'absence d'une utilisation d'une unité de conduite autonome (50).

4. Dispositif (10) selon l'une quelconque des revendications 1 à 3, dans lequel le module de traitement (24) est également conçu pour déterminer une posture du conducteur (4).

5. Dispositif (10) selon la revendication 4, dans lequel le module de traitement (24) de l'image acquise est conçu pour déterminer la direction associée à la tête du conducteur (4) et la position d'au moins une main du conducteur (4) sur la base d'une représentation de la posture du conducteur (4).

6. Dispositif (10) selon l'une quelconque des revendications 1 à 5, dans lequel le module de traitement (24) est conçu pour déterminer une direction d'orientation de la tête ou une direction de regard du conducteur (4).

7. Procédé de détection de la distraction d'un conducteur (4) d'un véhicule (1) comprenant des étapes de :
- acquisition d'au moins une image d'une zone de détection (D) située dans ledit véhicule (1), ladite zone de détection (D) comprenant une partie au moins du conducteur (4) du véhicule (1),
- détermination d'une direction associée à la tête du conducteur (4),
- détermination d'une position d'au moins une main du conducteur (4),
- émission d'un signal d'alarme en fonction de la détection d'une situation de distraction
- détection de la distraction dudit conducteur (4) par comparaison de la direction associée à la tête et de la position d'au moins une main déterminées pour déterminer la présence éventuelle d'au moins une main dans la direction associée à la tête du conducteur (4) **caractérisé en ce que** la situation de distraction correspond à une configuration dans laquelle au moins une main du conducteur (4) est localisée à l'extérieur d'au moins une zone autorisée définie à partir des zones dans lesquelles les mains se posent pendant la conduite d'un véhicule, le procédé comprenant également des étapes de :
- mesure d'un temps de détection pendant lequel au moins une main est localisée dans ladite direction associée à la tête déterminée par un module de traitement (24), et
- émission d'un signal d'alarme en fonction de la détection d'une situation de distraction.

## Patentansprüche

1. Vorrichtung (10) zur Erfassung der Ablenkung eines Fahrers (4) eines Fahrzeugs (1), umfassend :
- eine Bilderfassungseinheit (22), die so beschaffen ist, dass sie mindestens ein Bild eines Erfassungsbereichs (D) erfasst, der sich in dem Fahrzeug (1) befindet, wobei der Erfassungsbereich (D) mindestens einen Teil des Fahrers (4) des Fahrzeugs (1) umfasst,
- ein Verarbeitungsmodul (24) zur Verarbeitung des erfassten Bildes, das dazu ausgelegt ist, zu bestimmen:
eine Richtung, die dem Kopf des Fahrers (4) zugeordnet ist, und
eine Position von mindestens einer Hand des Fahrers (4),
- ein Modul (30) zum Ausgeben eines Alarmsignals in Abhängigkeit von der Erfassung einer Ablenkungssituation, und
- ein Analysemodul (26), das dazu ausgelegt ist, die Ablenkung des Fahrers (4) zu erkennen, indem es auf der Grundlage der dem Kopf zugeordneten Richtung und der Position mindestens einer Hand bestimmt, ob mindestens eine Hand in der dem Kopf des Fahrers (4) zugeordneten Richtung vorhanden ist.
**dadurch gekennzeichnet, dass** die Ablenkungssituation einer Konfiguration entspricht, in der mindestens eine Hand des Fahrers (4) außerhalb mindestens eines zulässigen Bereichs lokalisiert ist, der aus den Bereichen definiert ist, in denen die Hände während des Fahrens eines Fahrzeugs liegen, wobei die Vorrichtung auch ein Zeitmessmodul (28) umfasst, das dazu ausgelegt ist, eine Erfassungszeit auszuwerten, während der mindestens eine Hand in der durch das Verarbeitungsmodul (24) bestimmten kopfbezogenen Richtung lokalisiert ist, wobei die Ablenkungssituation eine Konfiguration umfasst, in der die Erfassungszeit größer als ein vorbestimmter Schwellenwert ist.

2. Vorrichtung (10) nach Anspruch 1, wobei das Sendemodul (30) dazu ausgelegt ist, das Alarmsignal im Falle eines Fahrzustands des Fahrzeugs (1) zu senden.

3. Vorrichtung (10) nach Anspruch 2, wobei der Fahrzustand dem Erfassen einer Fahrzeuggeschwindigkeit entspricht, die höher als ein vorbestimmter Geschwindigkeitswert ist, oder dem Fehlen einer Verwendung einer autonomen Fahreinheit (50).

4. Vorrichtung (10) nach einem der Ansprüche 1 bis 3, wobei das Verarbeitungsmodul (24) auch dazu ausgelegt ist, eine Körperhaltung des Fahrers (4) zu bestimmen.

5. Vorrichtung (10) nach Anspruch 4, wobei das Verarbeitungsmodul (24), die dem Kopf des Fahrers (4) zugeordnete Richtung und die Position mindestens einer Hand des Fahrers (4) auf der Grundlage einer Darstellung der Körperhaltung des Fahrers (4) zu bestimmen.

6. Vorrichtung (10) nach einem der Ansprüche 1 bis 5, wobei das Verarbeitungsmodul (24) dazu ausgelegt ist, eine Kopforientierungsrichtung oder eine Blickrichtung des Fahrers (4) zu bestimmen.

7. Verfahren zum Erfassen der Ablenkung eines Fahrers (4) eines Fahrzeugs (1), das die folgenden Schritte umfasst: :
- Erfassen von mindestens einem Bild eines Erfassungsbereichs (D), der sich in dem Fahrzeug (1) befindet, wobei der Erfassungsbereich (D) mindestens einen Teil des Fahrers (4) des Fahrzeugs (1) umfasst,
- Bestimmung einer Richtung, die dem Kopf des Fahrers (4) zugeordnet ist,
- Bestimmung einer Position von mindestens einer Hand des Fahrers (4),
- Ausgeben eines Alarmsignals in Abhängigkeit von der Erfassung einer Ablenkungssituation.
- Erkennen der Ablenkung des Fahrers (4) durch Vergleich der dem Kopf zugeordneten Richtung und der Position mindestens einer Hand, die ermittelt wurden, um das mögliche Vorhandensein
mindestens einer Hand in der dem Kopf des Fahrers (4) zugeordneten Richtung zu bestimmen. **dadurch gekennzeichnet, dass** die Ablenkungssituation einer Konfiguration entspricht, in der mindestens eine Hand des Fahrers (4) außerhalb mindestens eines zulässigen Bereichs lokalisiert ist, der aus den Bereichen definiert ist, in denen die Hände während des Fahrens eines Fahrzeugs ruhen, wobei das Verfahren auch die folgenden Schritte umfasst:
- Messen einer Erfassungszeit, während der mindestens eine Hand in der mit dem Kopf verbundenen Richtung lokalisiert ist, die von einem Verarbeitungsmodul (24) bestimmt wird, und
- Ausgeben eines Alarmsignals in Abhängigkeit von der Erfassung einer Ablenkungssituation.

## Claims

1. Device (10) for detecting distraction of a driver (4) of a vehicle (1) comprising :
- an image acquisition assembly (22) adapted to acquire at least one image of a detection zone (D) located in said vehicle (1), said detection zone (D) comprising at least part of the driver (4) of the vehicle (1),
- an acquired image processing module (24) designed to determine :
a direction associated with the head of the driver (4), and
a position of at least one hand of the driver (4),
- a emission module (30) for emitting an alarm signal based on the detection of a distraction situation, and
- an analysis module (26) designed to detect distraction of the said driver (4) by determining, on the basis of the direction associated with the head and the position of at least one hand, the possible presence of at least one hand in the direction associated with the head of the driver (4) **characterised in that** the distraction situation corresponds to a configuration in which at least one hand of the driver (4) is located outside at least one authorised zone defined from the zones in which the hands rest while driving a vehicle, the device also comprising a time measurement module (28) designed to evaluate a detection time during which at least one hand is located in said direction associated with the head determined by the processing module (24), the distraction situation comprising a configuration in which the detection time is greater than a predetermined threshold.

2. Device (10) according to claim 1, wherein the emission module (30) is designed to emit the alarm signal in the event of a driving condition of the vehicle (1).

3. A device (10) according to claim 2, wherein the driving condition corresponds to the detection of a vehicle speed greater than a predetermined speed value or to the absence of use of an autonomous driving unit (50).

4. Device (10) according to any one of claims 1 to 3, wherein the processing module (24) is also designed to determine a posture of the driver (4).

5. Device (10) according to claim 4, in which the acquired image processing module (24) is designed to determine the direction associated with the head of the driver (4) and the position of at least one hand of the driver (4) on the basis of a representation of the posture of the driver (4).

6. Device (10) according to any one of claims 1 to 5, in which the processing module (24) is designed to determine a direction of orientation of the head or a direction of gaze of the driver (4).

7. A method of detecting distraction of a driver (4) of a vehicle (1) comprising the steps of :
- acquiring at least one image of a detection zone (D) located in said vehicle (1), said detection zone (D) comprising at least part of the driver (4) of the vehicle (1),
- determination of a direction associated with the head of the driver (4),
- determining a position of at least one hand of the driver (4),
- emitting an alarm signal as a function of the detection of a distraction situation
- detecting distraction of said driver (4) by comparing the direction associated with the head and the position of at least one hand determined to determine the possible presence of at least one hand in the direction associated with the head of the driver (4)
**characterised in that** the distraction situation corresponds to a configuration in which at least one hand of the driver (4) is located outside at least one authorised zone defined from the zones in which the hands rest while driving a vehicle, the method also comprising the steps of :
- measuring a detection time during which at least one hand is located in said direction associated with the head determined by a processing module (24), and
- emitting an alarm signal as a function of the detection of a distraction situation.
